# EUROPÄISCHE PATENTSCHRIFT

(11) **EP 0 940 907 B1**
(45) Veröffentlichungstag und Bekanntmachung des Hinweises auf die Patenterteilung: **01.10.2008**
(21) Anmeldenummer: 98103623.9
(22) Anmeldetag: 02.03.1998
(51) Int. Cl.: H02M 7/217, H02M 3/156

(54) **Netzgerät für netzbetriebene elektronische Geräte, insbesondere für Elektrizitätszähler und/oder Rundsteuerempfänger, zur Erzeugung mindestens einer Gleichspannung mit einer zugehörigen vorgegebenen Leistung**
Power supply for mains operated electronic devices, in particular for electric meters and/or remote control receivers, for generating at least a DC voltage with a predefined power capacity
Bloc d'alimentation pour appareils électroniques alimentés par le secteur, en particulier pour compteur électrique et/ou récepteur de télécommande, pour la génération d'au moins une tension continue avec une puissance relative prédéterminée

(43) Veröffentlichungstag der Anmeldung: 08.09.1999
(73) Patentinhaber: Landis+Gyr AG, 6301 Zug (CH)
(72) Erfinder: Wasmer, Roland, 6048 Horw (CH); De Vries, Jacob, 6319 Allenwinden (CH)
(74) Vertreter: Lagler, Louis

(56) Entgegenhaltungen:
- EP-A- 0 320 307
- US-A- 3 978 388
- US-A- 4 351 021
- US-A- 5 668 705

## Beschreibung

Die Erfindung bezieht sich auf ein Netzgerät für netzbetriebene elektronische Geräte, insbesondere für Elektrizitätszähler und/oder Rundsteuerempfänger, zur Erzeugung mindestens einer Gleichspannung mit einer zugehörigen vorgegebenen Leistung gemäss dem Oberbegriff des Anspruchs 1.

Das Netzgerät wird vorzugsweise in Elektrizitätszählern, Rundsteuerempfängern,Tarifgeräten oder in einer Kombination mindestens eines Teils dieser Geräte verwendet zur Speisung der dort vorhandenen Elektronik.

Ein Netzgerät der eingangs genannten Art ist aus US 5 457 621 und US 5 621 629 bekannt, in denen ein Ausführungsbeispiel eines Netzgerätes beschrieben ist, in dem eine Phase eines Energieversorgungsnetzes über eine Sicherung, eine Schutzschaltung gegen Überspannungen und Stromspitzen, einen Gleichrichter in Brückenschaltung, zwei in Reihe geschaltete Transistoren und einen dazu in Reihe angeordneten Schalter eine Primärwicklung eines Transformators speist, dessen Sekundärwicklung über einen Einweg-Gleichrichter einen Ausgang eines 12 Volt-Speisegerätes bildet. Dem letzteren Ausgang sind zwei Kondensatoren parallel geschaltet. Der Ausgang des 12 Volt-Speisegerätes ist mit einem Eingang eines linearen Reglers verbunden zur Reduktion der 12 Volt-Gleichspannung aufeine geregelte 5 Volt-Gleichspannung. Die beiden in Reihe geschalteten Transistoren arbeiten als "voltage clamp" und begrenzen die Ausgangs-Gleichspannung des Gleichrichters, während der dazu in Reihe angeordnete Schalter als Zerhacker arbeitet zwecks Speisung der Primärwicklung des Transformators mit einem impulsförmigen Strom.

Weiter sind transformatorlose Netzgeräte bekannt zur Erzeugung einer relativ kleinen Gleichspannung in der Grössenordnung von 5 Volt, bei denen eine relativ hohe Netzspannung über eine Impedanz zur Strombegrenzung einen Gleichrichter speist, dem ein Shunt-Regler nachgeschaltet ist, der z. B. eine Zenerdiode enthält. Der Ausgangsstrom eines solchen Netzgerätes ist maximal gleich dem in der Impedanz fliessenden Strom und daher begrenzt. Diese Netzgeräte besitzen somit einen schlechten Wirkungsgrad. Sie sind jedoch preisgünstig.

Ausserdem sind transformatorlose Netzgeräte bekannt zur Erzeugung einer relativ kleinen Gleichspannung in der Grössenordnung von 5 VoIt, deren Gleichrichter unmittelbar von einer relativ hohen Netzspannung gespeist sind und daher relativ teure Bauteile benötigen, die für 500 bis 1000 Volt ausgelegt sein müssen. Der Strom bei 5 Volt kann relativ gross sein und die Netzgeräte haben einen guten Wirkungsgrad.

In US 5 668 705 ist ein Netzgerät für netzbetriebene elektronische Geräte zur Erzeugung mindestens einer Gleichspannung mit einer zugehörigen vorgegebenen Leistung bei einer eingangsseitigen Speisung des Netzgerätes mit einer Ein- oder Mehrphasigen-Netzspannung offenbart, wobei das Netzgerät eine Eingangsschaltung und einen nachgeschalteten Regler aufweist, mit einem in der Eingangsschaltung befindlichen Gleichrichter und einem Kondensator, der einem Ausgang der Eingangsschaltung parallel geschaltet ist, wobei in der Eingangsschaltung mindestens eine Impedanz in Reihe geschaltet ist mit dem Gleichrichter, ferner der Regler ein mit einer Steuerschaltung versehener Schaltregler ist und wobei dem Ausgang der Eingangsschaltung ein Shunt-Regler parallel geschaltet ist.

Die US 4 351 021 zeigt ein Netzgerät, bei dem eine Steuerschaltung eine Anordnung zur Einschaltung eines Schaltreglers bei Erreichen eines stationären Spannungswertes über einem Kondensator ist, d.h., während der anfänglichen Ladephase dieses Kondensators.

Der Erfindung liegt die Aufgabe zugrunde, ein preisgünstiges tranformatorloses Netzgerät der eingangs genannten Art zu verwirklichen, welches einen guten Wirkungsgrad besitzt und ab einer Ein- oder Mehrphasigen-Netzspannung eine vorgegebene Gleichstromleistung bei einer relativ niedrigen Gleichspannung von beispielsweise 5V erzeugt unter gleichzeitiger Niedrighaltung einer zugehörigen Scheinleistungs-Aufnahme am Eingang des Netzgerätes von maximal 5VA pro Netzphase.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Ein Ausführungsbeispiel der Erfindung ist in der Zeichnung dargestellt und wird im folgenden näher beschrieben.

Es zeigen:
- Fig. 1: ein Blockschaltbild eines erfindungsgemässen Netzgerätes,
- Fig. 2: ein Schaltbild einer Rückstellschaltung und
- Fig. 3: ein Schaltbild eines mit handelsüblichen Komparatoren aufgebauten Reglers.

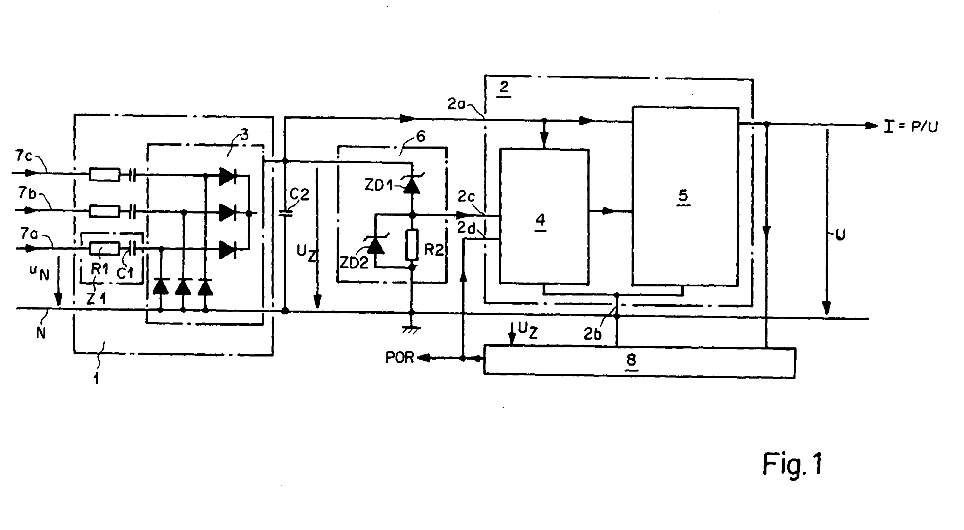

Das erfindungsgemässe Netzgerät für netzbetriebene elektronische Geräte, insbesondere für Elektrizitätszähler und/oder Rundsteuerempfänger, dient bei einer eingangsseitigen Speisung des Netzgerätes mit einer Ein- oder Mehrphasigen-Netzspannung zur Erzeugung mindestens einer Gleichspannung U mit einer zugehörigen vorgegebenen Leistung P. Das Netzgerät weist eine Eingangsschaltung 1 und einen nachgeschalteten Regler 2 auf mit einem in der Eingangsschaltung 1 befindlichen Gleichrichter 3. Der Regler 2 ist ein mit einer Steuerschaltung 4 versehener Schaltregler 5. In der Eingangsschaltung 1 ist mindestens eine Impedanz Z1 mit dem Gleichrichter 3 in Reihe geschaltet, wobei vorzugsweise die Impedanz Z1 vor dem Gleichrichter 3 angeordnet ist. Wenn mehrere Phasen einer Mehrphasigen-Netzspannung eingangsseitig am Netzgerät anschliessbar sind, ist vorzugsweise je eine Impedanz Z1 pro anschliessbare Netzphase vorhanden. Diese ist dann jeweils zwischen einem von drei Eingängen des Netzgerätes und dem Gleichrichter 3 angeordnet (siehe Fig. 1). Die Impedanz Z1 ist z. B. eine Induktanz, ein Widerstand oder bevorzugt, wie in der Fig. 1 dargestellt, eine Reihenschaltung R1;C1 eines Widerstandes R1 und eines Kondensators C1. Ein weiterer Kondensator C2 und ein Shunt-Regler 6 sind dem Ausgang der Eingangsschaltung 1 parallel geschaltet. Die Steuerschaltung 4 ist eine Anordnung zur Einschaltung des Schaltreglers 5 bei Erreichen eines stationären Spannungswertes über den Kondensator C2.

Nachfolgend gilt die Annahme, dass im Betrieb das Netzgerät eingangsseitig mit einer dreiphasigen Netzspannung gespeist ist, jedoch auch noch korrekt funktionieren kann, wenn zwei der drei Phasen der Netzspannung nicht angeschlossen sind oder durch Netzausfall fehlen. D. h. das Netzgerät muss mit einem sehr grossen Eingangsstrom-Bereich funktionieren können. Eine Phasenspannung der dreiphasigen Netzspannung ist in der Fig. 1 mit u_{N} bezeichnet. Bei einer Speisung mit einer dreiphasigen Netzspannung besteht der Gleichrichter 3 für die Erzeugung einer positiven Gleichspannung U beispielsweise aus sechs Dioden in Brückenschaltung. Die dreiphasige Netzspannung speist dann z. B. über drei Phasenleitern 7a, 7b und 7c sowie einen Null-Leiter N das Netzgerät, wobei die drei Phasenleiter 7a bis 7c über je eine von drei Impedanzen Z1 mit einem der drei Wechselstromanschlüsse der Brückenschaltung verbunden sind. Die beiden Gleichstromanschlüsse der Brückenschaltung bilden dann einen zweipoligen Ausgang des Gleichrichters 3, wovon vorzugsweise einer mit dem Null-Leiter N des Energieversorgungsnetzes verbunden ist und z. B. an Masse liegt. Die Masse stellt in diesem Fall das Bezugspotential sowohl der Gleichspannung U als auch einer im Betrieb am Ausgang der Eingangsschaltung 1 vorhandenen Gleichspannung U_{Z} dar. Die letztere ist die Speisespannung des Reglers 2, der Steuerschaltung 4 und des Schaltreglers 5. Daher ist der zweipolige Ausgang der Eingangsschaltung 1 mit einem zweipoligen Speiseeingang 2a;2b des Reglers 2 verbunden, der seinerseits innerhalb des Reglers 2 auf die zweipolige Speiseeingänge der Steuerschaltung 4 und des Schaltreglers 5 geführt ist. Der Eingang 2b liegt dabei an Masse.

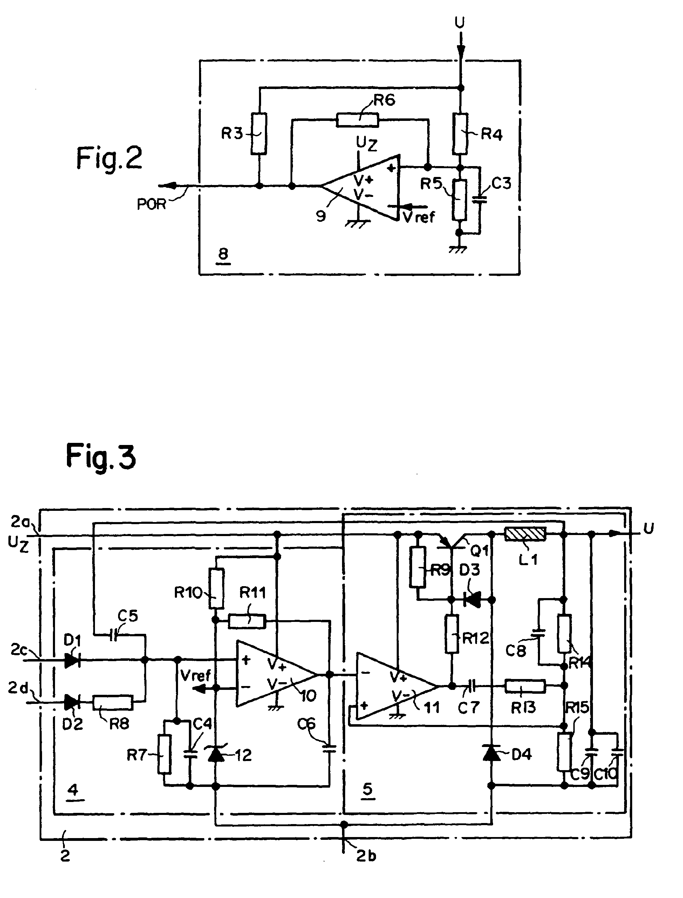

Ein Ausgang des Shunt-Reglers 6 ist mit einem Eingang 2c des Reglers 2 verbunden. Der Shunt-Regler 6 enthält vorzugsweise eine Reihenschaltung ZD1;R2 eines Messwiderstandes R2 und mindestens einer Zenerdiode ZD1, welche Reihenschaltung dem Ausgang der Eingangsschaltung 1 parallel geschaltet ist. Ein gemeinsamer Anschluss der Zenerdiode ZD1 und des Messwiderstandes R2 bildet den Ausgang des Shunt-Reglers 6. Der letztere realisiert eine Vorstabilisietung: Bei Erzeugung einer positiven Gleichspannung U speisen positive Halbwellen der Netzspannung u_{N} den Kondensator C2 bis zum Erreichen der Gleichspannung U_{Z}, die annähernd gleich der Zenerspannung der Zenerdiode ZD1 ist. Erreicht die Gleichspannung U_{Z} am Ausgang der Eingangsschaltung 1, d. h. die Spannung über den Kondensator C2, annähernd die Zenerspannung der Zenerdiode ZD1, wird die Spannung des Kondensators C2 und damit die Gleichspannung U_{Z} auf den Wert dieser Zenerspannung begrenzt. Der Messwiderstand R2 dient zum Messen des im Shunt-Regler 6, d. h. in der Zenerdiode ZD1 fliessenden Stromes. Erst wenn dieser Strom gross genug ist, d. h. wenn der Kondensator C2 geladen und die Netzspannung u_{N} gross genug sind, wird eine im nachfolgenden Regler 2 vorhandene Referenzspannung Vref freigegeben (siehe Fig. 3). Dem Messwiderstand R2 ist vorzugsweise eine weitere Zenerdiode ZD2 parallel geschaltet zwecks Begrenzung des Spannungsabfalls über den Messwiderstand R2. Dadurch wird eine Zerstörung durch Überspannung von im Regler 2 vorhandenen Komponenten, wie z. B. handelsüblichen Komparatoren, verhindert. Die letzteren vertragen z. B. nur eine maximale Spannung von 36 Volt.

Anstelle der Zenerdiode ZD1 kann auch eine Zenerdiode-Reihenschaltung vorhanden sein, die aus mehreren gleichgepolten Zenerdioden besteht, die in Reihe geschaltet sind.

Der bzw. die Kondensatoren C1 sowie der Shunt-Regler 6 sind so bemessen, dass sie im Betrieb genügend Strom liefern und dass am Ausgang der Eingangsschaltung 1 eine Gleichspannung U_{Z} vorhanden ist, die mindestens zweimal grösser ist als die zu erzeugende Gleichspannung U. Die letztere ist vorzugsweise eine Speisespannung eines Mikrocomputers und liegt beispielsweise in der Grössenordnung von 5 Volt. Die im Betrieb am Ausgang des Eingangsschaltung 1 anstehende Gleichspannung U_{Z} beträgt dann vorzugsweise 30 Volt bis 50 Volt. Der Kapazitätswert des Kondensators C1 ist ausserdem jeweils so bemessen, dass im Betrieb pro Netzphase ein Mittelwert eines resultierenden einweggleichgerichteten Eingangsstromes des Netzgerätes kleiner ist als ein zur vorgegebenen Leistung P der Gleichspannung U gehörender Gleichstrom I=P/U. Bei einer zur Gleichspannung U = 5 Volt gehörigen Leistung P in der Grössenordnung von beispielsweise 100 mW, d. h. bei einem Ausgangs-Gleichstrom des Netzgerätes von 20 mA, liegt der Mittelwert des resultierenden einweggleichgerichteten Eingangsstromes des Netzgerätes pro Netzphase in der Grössenordnung von 10 mA. In diesem Fall besitzt der Kondensator C1 einen kleinen Wert in der Grössenordnung von 330 nF, was für das Netzgerät eine hohe Eingangsimpedanz, einen niedrigen Eingangsstrom und eine niedrige Scheinleistungs-Aufnahme in der Grössenordnung von annähernd 5VA bei u_{N} = 230 Volt ergibt.

Der Widerstand R1 ist vorzugsweise ein stoss- und hochspannungsfester Drahtwiderstand mit einem Widerstandswert in der Grössenordnung von 680 Ohm. Er besitzt demnach einen gegenüber dem Impedanzwert des Kondensators C1 veruachlässigbaren kleinen Wert, so dass der letztere strombestimmend ist. Der Widerstand R1 ist nur vorhanden, um den Ladestrom des Kondensators C2 zu begrenzen, wenn hohe Frequenzanteile in der Netzspannung des Energieversorgungsnetzes vorhanden sind, für die der Impedanzwert des Kondensators C1 zu klein ist. Bei genügend hoher Netzspannung u_{N} und unter Vernachlässigung des Widerstandes R1 ist das Energieversorgungsnetz mit dem als verlustfreie Vorimpedanz arbeitenden Kondensator C1 eine kapazitive Stromquelle.

Der Kondensator C2 ist so bemessen, dass im Betrieb sein Energieinhalt ausreicht, um eine bei einem Netzausfall entstehende Netzspannungs-Ausfalldauer zu überbrücken. Er ist ein handelsüblicher Elektrolyt-Kondensator und sein Kapazitätswert beträgt z. B. 1000 µF.

Einem weiteren Eingang 2d des Reglers 2 ist zwecks Realisierung einer Hysterese eine Rückstellschaltung 8 vorgeschaltet, deren Eingang mit einem Ausgang des Netzgerätes verbunden ist, an dem im Betrieb die Gleichspannung U ansteht. Die Rückstellschaltung 8 enthält einen mit einer positiven Rückkopplung versehenen Komparator 9 (siehe Fig. 2) und dient primär zur Rückstellung der Geräteelektronik bei einer Netzwiederkehr nach einem Spannungsausfall.

Ausserdem dient sie, wie bereits erwähnt, zur Realisierung der Hysterese am Eingang 2d des Reglers 2. Der Komparator 9 sowie weitere, im Regler 2 enthaltene Komparatoren 10 und 11 (siehe Fig. 3) sind z. B. handelsübliche, in einer integrierten Schaltung, z. B. vom Typ LM339, angeordnete Komparatoren, die je einen "Open collector"-Ausgang besitzen. Die Gleichspannung U_{Z} speist die Speiseanschlüsse dieser drei Komparatoren 9 bis 11.

Der mit dem Ausgang des Netzgerätes verbundene Eingang der Rückstellschaltung 8 ist innerhalb der letzteren über einen Widerstand R3 mit einem Ausgang des Komparators 9 und über einen Spannungsteiler R4;R5 mit Masse verbunden (siehe Fig. 2). Der letztere besteht aus zwei in Reihe geschalteten Widerständen R4 und R5, deren gemeinsamer Verbindungspunkt unmittelbar mit einem nichtinvertierenden Eingang des Komparators 9, über einen Kondensator C3 mit Masse und über einen Widerstand R6 von z. B. 1MΩ mit dem Ausgang des Komparators 9 verbunden ist. An einem invertierenden Eingang des letzteren steht die Referenzspannung Vref an, die, wie noch später erläutert, im Regler 2 erzeugt wird. Der Widerstand R6 realisiert eine positive Rückkopplung zwischen Ausgang und nichtinvertierendem Eingang des Komparators 9. Am Ausgang des letzteren ist ein Ausgangssignal POR ("Power on reset") vorhanden, welches nach einem Netzausfall die Geräteelektronik zurückstellt und unter anderem dem Eingang 2d des Reglers 2 zugeführt ist. Die Werte der Widerstände R3 bis R6 sind so gewählt, dass der beschaltete Komparator 9 eine Hysterese aufweist, die z. B. bei einem Unterschreiten von 95% des nominalen Wertes der Ausgangs-Gleichspannung U aktiv wird. Die Hysterese beträgt z. B. 50 mV. Der Wert des "Pullup"-Widerstandes R3 am "Open collector"-Ausgang des Komparators 9 ist mit 1 kΩ klein gewählt, so dass die Ausgangsspannung U des Netzteils auch dann herunterfährt, wenn bei einer POR-Rückstellung die Stromaufnahme der Geräteelektronik plötzlich viel kleiner werden sollte.

In einer bevorzugten Ausführung der Erfindung besteht die Steuerschaltung 4 und der Schaltregler 5 aus je einem beschalteten Komparator 10 bzw. 11 (siehe Fig. 3), d. h. der Regler 2 ist mit zwei Komparatoren 10 und 11 bestückt. Wie bereits erwähnt, sind die letzteren zusammen mit dem Komparator 9 z. B. Teil einer einzigen preisgünstigen, handelsüblichen integrierten Schaltung, so dass der Regler 2 nur handelsübliche und bezüglich Schaltgeschwindigkeit anspruchslose Komparatoren enthält.

Der vom Shunt-Regler 6 angesteuerte Eingang 2c des Reglers 2 ist innerhalb der Steuerschaltung 4 aufdie Anode einer Diode D1 geführt, deren Kathode unmittelbar mit einem nichtinvertierenden Eingang des Komparators 10, über eine Parallelschaltung eines Widerstandes R7 und eines Kondensators C4 mit Masse und über einen Kondensator C5 mit dem Ausgang der Reglers 2 verbunden ist, der gleichzeitig der Ausgang des Netzgerätes ist. Die Gleichspannung U ist somit über den Kondensator C5 auf den nichtinvertierenden Eingang des Komparators 10 geführt. Der Eingang 2d des Reglers 2 ist innerhalb der Steuerschaltung 4 mit der Anode einer Diode D2 verbunden, deren Kathode über einen Widerstand R8 auf den nichtinvertierenden Eingang des Komparators 10 geführt ist. Der Eingang 2a des Reglers 2, an dem im Betrieb die Gleichspannung U_{Z} ansteht, ist innerhalb der Steuerschaltung 4 über einen Widerstand R10 mit einem invertierenden Eingang des Komparators 10 verbunden. Der letztere Eingang ist ausserdem unmittelbar mit dem invertierenden Eingang des Komparators 9 (in Fig. 2 und Fig. 3 mit der Bezeichnung Vref und Pfeile angedeutet), über eine Spannungsreferenz 12 mit Masse und über einen Widerstand R11 mit einem Ausgang des Komparators 10 verbunden. Ein Kondensator C6 ist zwischen dem letzteren Ausgang und Masse angeordnet.

Der Ausgang des Komparators 10 bildet einen Ausgang der Steuerschaltung 4 und ist auf einen invertierenden Eingang des Komparators 11 geführt, der gleichzeitig ein Eingang des Schaltreglers 5 ist. Innerhalb des letzteren ist der Eingang 2a des Reglers 2 unmittelbar mit einem Emitter eines Schalttransistors Q1 und über einen Widerstand R9 mit dessen Basis verbunden. Der Schalttransistor Q1 ist z. B. ein PNP-Bipolartransistor vom Typ 2N2907. Der Kollektor des letzteren ist über eine Induktanz L1 von z. B. 3.3 mH auf den Ausgang des Reglers 2 geführt. Ein Ausgang des Komparators 11 ist über einen Widerstand R12 mit der Basis des Schalttransistors Q1 und der Kathode einer Diode D3 verbunden, deren Anode am Kollektor des Schalttransistors Q1 angeschlossen ist. Dieser Kollektor ist ausserdem noch mit der Kathode einer Diode D4 verbunden, deren Anode an Masse liegt. Die Diode D3 ist eine Shottky-Barrier-Diode und z. B. vom Typ LL103, während die Dioden D1, D2 und D4 z. B. vom Typ 1N4148 sind. Der Ausgang des Komparators 11 ist zusätzlich noch über eine Reihenschaltung eines Kondensators C7 und eines Widerstandes R13 mit einem nichtinvertierenden Eingang des Komparators 11 und einer Mittelpunktanzapfüng eines Spannungsteilers R14;R15 verbunden, welcher letzterer aus zwei Widerständen R14 und R15 besteht und vom Ausgang des Reglers 2 her mit der Gleichspannung U gespeist ist. Einer der beiden Komparatoren des Reglers 2, nämlich der Komparator 11, ist somit mittels der Reihenschaltung C7;R13 mit einer positiven Rückkopplung versehen, was zur Erhöhung seiner Schaltgeschwindigkeit dient. Dem Widerstand R14 ist ein Kondensator C8 parallel geschaltet. Ausserdem sind im Schaltregler 5 zwei Kondensatoren C9 und C10, deren Kapazitätswerte z. B. 100 nF bzw. 47 µF betragen, dem Ausgang des Schaltreglers 5 parallel geschaltet, welcher gleichzeitig der Ausgang des Reglers 2 und des Netzgerätes ist.

Der Schaltregler 5 arbeitet mit dem Schalttransistor Q1, der Induktanz L1, der Diode D4 sowie den Kondensatoren C9 und C10 als Abwärts-Regler, wobei der Schalttransistor Q1 als Schalter funktioniert. Die Funktionsweise eines Schaltreglers ist an sich bekannt und wird daher nicht näher erläutert. Von der Speisespannung U_{Z} ist mit Hilfe des Widerstandes R10 und der Spannungsreferenz 12 die Referenzspannung Vref abgeleitet und an den invertierenden Eingängen der Komparatoren 9 und 10 angelegt. Die Referenzspannung Vref beträgt z. B. 2.5 Volt. Die Spannungsreferenz 12 ist z. B. vom Typ LM385. Ein Aufstarten des Reglers 2 führt dazu, dass durch die Belastung die Spannung am Kondensator C2 sogleich etwas absinkt, so dass der Komparator 10 den Regler 2 sogleich wieder sperren könnte. Um dies zu verhindern, ist am Eingang des Reglers 2 mittels des Kondensators C5 eine kapazitive Mitkopplung der Gleichspannung U vorhanden. Sobald die Gleichspannung U etwas ansteigt, wird dadurch das Potential am nichtinvertierenden Eingang des Komparators 10 etwas angehoben. Ist dann die Gleichspannung U auf ihren Nominalwert von z. B. 5 Volt angestiegen, wird von der Rückstellschaltung 8 über die Diode D2 und den Widerstand R8 verhindert, dass bei einem Absinken des Ledestromes und der Spannung des Kondensators C2 der Regler 2 wieder gesperrt wird. Im Regler 2 besteht kein Kurzschluss-Schutz. Aus diesem Grunde wird die Referenzspannung Vref über ein als Tiefpassfilter wirksames RC-Glied R11;C6, bestehend aus dem Widerstand R11 und dem Kondensator C6, dem invertierenden Eingang des Komparators 11 zugeführt zwecks Realisierung eines sanften Anlaufs. Liegt die Gleichspannung U unter einem Vergleichswert, schaltet der Komparator 11 den Schalttransistor Q1 ein. Der Basisstrom des letzteren reicht bei einer Spannung von U_{Z} ab ca 15 Volt zur Sättigung des Schalttransistors Q1 aus. Diese Sättigung wird jedoch von der Diode D3 verhindert, weil der Ausschaltvorgang durch die Art des Komparator-Ausganges ("Open collector") sonst zu lange dauern würde und die Gleichspannung U somit stark überschiessen würde sowie möglicherweise die Induktanz L1 in die Sättigung käme. Falls letzteres eintritt, steigt die Gleichspannung U am Ausgang des Reglers 2 sehr schnell an. Da die parasitäre Kapazität des Eingangs des Komparators 11 mit dem relativ hochohmigen Spannungsteiler R14;R15 ein zusätzliches Tiefpassfilter bildet, würde der Komparator 11 diesen Anstieg verzögert, d. h. zu spät erkennen. Durch den Kondensator C8 wird der Wechselspannungsanteil der Ausgangsspannung U des Reglers 2 dem Eingang des Komparators 11 direkt zugeführt und diese Verzögerung reduziert. Der Kondensator C7 bewirkt eine dynamische Mitkopplung und damit ein schnelleres Schalten des Komparators 11, da die Schaltzeit abhängig ist von der Differenzspannung am Komparator 11.

In einer besonders bevorzugten Ausführung der Erfindung ist mindestens ein Teil der elektrischen Bauteile des Reglers 2 und des Shunt-Reglers 6 in einer integrierten Schaltung enthalten.

## Patentansprüche

1. Netzgerät für netzbetriebene elektronische Geräte, insbesondere für Elektrizitätszähler und/oder Rundsteuerempfänger, zur Erzeugung mindestens einer Gleichspannung (U) mit einer zugehörigen vorgegebenen Leistung (P) bei einer eingangsseitigen Speisung des Netzgerätes mit einer Ein- oder Mehrphasigen-Netzspannung, wobei das Netzgerät eine Eingangsschaltung (1) und einen nachgeschalteten Regler (2) aufweist, mit einem in der Eingangsschaltung (1) befindlichen Gleichrichter (3) und einem Kondensator (C2), der einem Ausgang der Eingangsschaltung (1) parallel geschaltet ist, wobei in der Eingangsschaltung (1) mindestens eine Impedanz (Z1) in Reihe geschaltet ist mit dem Gleichrichter (3), ferner der Regler (2) ein mit einer Steuerschaltung (4) versehener Schaltregler (5) ist und wobei dem Ausgang der Eingangsschaltung (1) ein Shunt-Regler (6) parallel geschaltet ist,
**dadurch gekennzeichnet, dass** der Shunt-Regler (6) eine Reihenschaltung (ZD1;R2) eines Messwiderstandes (R2) und mindestens einer Zenerdiode (ZD1) enthält, dass die Reihenschaltung (ZD1;R2) dem Ausgang der Eingangsschaltung (1) parallel geschaltet ist und dass ein gemeinsamer Anschluss der Zenerdiode (ZD1) und des Messwiderstandes (R2) einen Ausgang des Shunt-Reglers (6) bildet und mit einem Eingang (2c) des Reglers (2) verbunden ist.

2. Netzgerät nach Anspruch 1, **dadurch gekennzeichnet, dass** mehrere Phasen einer Mehrphasigen-Netzspannung eingangsseitig am Netzgerät anschliessbar sind und pro anschliessbare Netzphase je eine Impedanz (Z1) vorhanden ist.

3. Netzgerät nach Anspruch 2, **dadurch gekennzeichnet, dass** die Steuerschaltung (4) eine Anordnung ist zur Einschaltung des Schaltreglers (5) bei Erreichen eines stationären Spannungswertes über dem Kondensator (C2).

4. Netzgerät nach einem der Ansprüche 1 bis 3, **dadurch gekennzeichnet, dass** die Gleichspannung (U) eine Speisespannung eines Mikrocomputers ist.

5. Netzgerät nach einem der Ansprüche 1 bis 4, **dadurch gekennzeichnet, dass** eine im Betrieb am Ausgang der Eingangsschaltung (1) anstehende Gleichspannung (U_{Z}) 30 bis 50 Volt beträgt, wenn die Gleichspannung (U) in der Grössenordnung von 5 Volt liegt, und dass die zur Gleichspannung (U) gehörige Leistung (P) in der Grössenordnung von 100 mW liegt.

6. Netzgerät nach einem der Ansprüche 1 bis 5, **dadurch gekennzeichnet, dass** der Regler (2) handelsübliche und bezüglich Schaltgeschwindigkeit anspruchslose Komparatoren (10, 11) enthält.

7. Netzgerät nach Anspruch 6, **dadurch gekennzeichnet, dass** einer der Komparatoren (11) des Reglers (2) zur Erhöhung seiner Schaltgeschwindigkeit mit einer positiven Rückkopplung (C7;R13) versehen ist.

8. Netzgerät nach einem der Ansprüche 1 bis 7, **dadurch gekennzeichnet, dass** einem Eingang (2d) des Reglers (2) zwecks Realisierung einer Hysterese eine Rückstellschaltung (8) vorgeschaltet ist, deren Eingang mit einem Ausgang des Netzgerätes verbunden ist und die einen mit einer positiven Rückkopplung versehenen Komparator (9) enthält.

9. Netzgerät nach einem der Ansprüche 1 bis 8, **dadurch gekennzeichnet, dass** mindestens ein Teil der elektrischen Bauteile des Reglers (2) und des Shunt-Reglers (6) in einer integrierten Schaltung enthalten ist.

## Claims

1. Power supply unit for mains-operated electronic devices, in particular for electricity meters and/or ripple-control receivers, for generating at least one DC voltage (U) with an associated predefined power (P) when the power supply unit is supplied with a single-phase or multiphase mains voltage on the input side, the power supply unit having an input circuit (1) and a downstream regulator (2), with a rectifier (3), which is situated in the input circuit (1), and a capacitor (C2) which is connected in parallel with an output of the input circuit (1), at least one impedance (Z1) being connected in series with the rectifier (3) in the input circuit (1), the regulator (2) also being a switched-mode regulator (5) which is provided with a control circuit (4), and a shunt regulator (6) being connected in parallel with the output of the input circuit (1),
**characterized in that** the shunt regulator (6) contains a series circuit (ZD1; R2) comprising a measurement resistor (R2) and at least one zener diode (ZD1), **in that** the series circuit (ZD1; R2) is connected in parallel with the output of the input circuit (1), and **in that** a common connection of the zener diode (ZD1) and the measurement resistor (R2) forms an output of the shunt regulator (6) and is connected to an input (2c) of the regulator (2).

2. Power supply unit according to Claim 1, **characterized in that** a plurality of phases of a multiphase mains voltage can be connected to the input of the power supply unit and an impedance (Z1) is provided for each mains phase which can be connected.

3. Power supply unit according to Claim 2, **characterized in that** the control circuit (4) is an arrangement for switching on the switched-mode regulator (5) when a stationary voltage value is reached across the capacitor (C2).

4. Power supply unit according to one of Claims 1 to 3, **characterized in that** the DC voltage (U) is a supply voltage of a microcomputer.

5. Power supply unit according to one of Claims 1 to 4, **characterized in that** a DC voltage (U_{Z}) which is applied to the output of the input circuit (1) during operation is 30 to 50 volts if the DC voltage (U) is of the order of magnitude of 5 volts, and **in that** the power (P) associated with the DC voltage (U) is of the order of magnitude of 100 mW.

6. Power supply unit according to one of Claims 1 to 5, **characterized in that** the regulator (2) contains commercially available comparators (10, 11) which are undemanding in terms of the switching speed.

7. Power supply unit according to Claim 6, **characterized in that** one of the comparators (11) of the regulator (2) is provided with positive feedback (C7; R13) in order to increase its switching speed.

8. Power supply unit according to one of Claims 1 to 7, **characterized in that,** in order to achieve hysteresis, a reset circuit (8) whose input is connected to an output of the power supply unit and which contains a comparator (9) provided with positive feedback is connected upstream of an input (2d) of the regulator (2).

9. Power supply unit according to one of Claims 1 to 8, **characterized in that** at least some of the electrical components of the regulator (2) and of the shunt regulator (6) are contained in an integrated circuit.

## Revendications

1. Bloc d'alimentation pour appareils électroniques alimentés par le secteur, en particulier pour compteurs électriques et/ou récepteurs de commande centralisée, pour la génération d'au moins une tension continue (U) avec une puissance associée prédéterminée (P), le bloc d'alimentation étant alimenté côté entrée par une tension de secteur mono- ou polyphasée, le bloc d'alimentation présentant un circuit d'entrée (1) et un régulateur (2) placé en aval, avec un redresseur (3) se trouvant dans le circuit d'entrée (1) et un condensateur (C2) qui est branché en parallèle avec une sortie du circuit d'entrée (1), au moins une impédance (Z1) étant branchée en série avec le redresseur (3) dans le circuit d'entrée (1), le régulateur (2) étant un régulateur à découpage (5) pourvu d'un circuit de commande (4) et un régulateur de shunt (6) étant branché en parallèle avec la sortie du circuit d'entrée (1),
**caractérisé en ce que** le régulateur de shunt (6) contient un couplage en série (ZD1 ; R2) d'une résistance de mesure (R2) et d'au moins une diode Zener (ZD1), que le couplage en série (ZD1 ; R2) est branché en parallèle avec la sortie du circuit d'entrée (1) et qu'une connexion commune de la diode Zener (ZD1) et de la résistance de mesure (R2) forme une sortie du régulateur de shunt (6) et est reliée à une entrée (2c) du régulateur (2).

2. Bloc d'alimentation selon la revendication 1, **caractérisé en ce que** plusieurs phases d'une tension de secteur polyphasée peuvent être connectées au bloc d'alimentation côté entrée et une impédance (Z1) est présente pour chaque phase de secteur connectable.

3. Bloc d'alimentation selon la revendication 2, **caractérisé en ce que** le circuit de commande (4) est un montage conçu pour activer le régulateur à découpage (5) en cas d'atteinte d'une valeur de tension stationnaire aux bornes du condensateur (C2).

4. Bloc d'alimentation selon l'une des revendications 1 à 3, **caractérisé en ce que** la tension continue (U) est une tension d'alimentation d'un micro-ordinateur.

5. Bloc d'alimentation selon l'une des revendications 1 à 4, **caractérisé en ce qu'**une tension continue (U_{Z}) présente en fonctionnement à la sortie du circuit d'entrée (1) a une valeur comprise entre 30 et 50 volts quand la tension continue (U) se situe dans l'ordre de grandeur de 5 volts et que la puissance (P) correspondant à la tension continue (U) se situe dans l'ordre de grandeur de 100 mW.

6. Bloc d'alimentation selon l'une des revendications 1 à 5, **caractérisé en ce que** le régulateur (2) contient des comparateurs (10, 11) de type usuel et peu exigeants en ce qui concerne la vitesse de commutation.

7. Bloc d'alimentation selon la revendication 6, **caractérisé en ce qu'**un des comparateurs (11) du régulateur (2) est pourvu d'une rétroaction positive (C7 ; R13) pour augmenter sa vitesse de commutation.

8. Bloc d'alimentation selon l'une des revendications 1 à 7, **caractérisé en ce qu'**en amont d'une entrée (2d) du régulateur (2) est couplé, en vue de réaliser une hystérésis, un circuit de réinitialisation (8) dont l'entrée est reliée à la sortie du bloc d'alimentation et qui contient un comparateur (9) pourvu d'une rétroaction positive.

9. Bloc d'alimentation selon l'une des revendications 1 à 8, **caractérisé en ce qu'**au moins une partie des composants électriques du régulateur (2) et du régulateur de shunt (6) est contenue dans un circuit intégré.
